(19)

Europäisches
Patentamt

European
Patent Office

Office européen
des brevets

(11) **EP 4 417 589 A1**

(12) **EUROPEAN PATENT APPLICATION**

(43) Date of publication:
**21.08.2024 Bulletin 2024/34**

(21) Application number: **23178788.8**

(22) Date of filing: **12.06.2023**

(51) International Patent Classification (IPC):
***C04B 28/04*** [(2006.01)]

(52) Cooperative Patent Classification (CPC):
(C-Sets available)
**C04B 28/04** (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Swisspearl Group AG
8867 Niederurnen (CH)**

(72) Inventors:
• **VIG, Peter Hessellund
9260 Gistrup (DK)**

• **JØLNÆS, Morten Bjerkvig
9280 Storvorde (DK)**
• **ROJKA, Tomá
312 00 Pilsen (CZ)**
• **HUZYCOVÁ, Zuzana
267 51 Svatá (CZ)**

(74) Representative: **Schmitz, Joseph
Isler & Pedrazzini AG
Giesshübelstrasse 45
Postfach 1772
8027 Zürich (CH)**

(54) **UPCYCLING OF CEMENTITIOUS WASTE FOR USE IN A FIBRE CEMENT PRODUCT**

(57)     The present invention relates to a process for the production of a fiber cement product, using waste material generated during said production of a fiber cement product or other waste material, in particular, by carbonating the waste material.

EP 4 417 589 A1

Processed by Luminess, 75001 PARIS (FR)

**(Cont. next page)**

(52) Cooperative Patent Classification (CPC): (Cont.)

C-Sets
**C04B 18/167, C04B 20/023;**
**C04B 28/02, C04B 14/38, C04B 16/06,**
**C04B 18/24, C04B 22/103, C04B 40/0231,**
**C04B 40/024;**
**C04B 28/04, C04B 14/42, C04B 18/167,**
**C04B 22/103, C04B 40/024;**
**C04B 28/04, C04B 14/4668, C04B 18/167,**
**C04B 22/103, C04B 40/024**

**Description**

TECHNICAL FIELD

The present invention relates to a process for the production of a fiber cement product, using waste material generated during said production of a fiber cement product or other waste material, in particular, by carbonating the waste material.

PRIOR ART

During the manufacture of fiber cement products, such as for example panels, large green sheets of fiber cement are produced in one size, cured, and then fashioned into smaller panels of different forms or sizes.

This can mostly be done by either sawing or milling the cured sheet into the desired form and size, and depending on the panel, by drilling holes at predetermined positions into the panel.

During that process, waste materials such as saw dust, milling dust and drilling shavings are formed. They represent a waste stream that is usually discarded and which may be put to better use. Thus, it has been proposed to re-introduce these particulate materials into the cementitious slurry from which the fiber cement products are manufactured as a filler, to replace the fillers that would otherwise have to be purchased, in order to decrease the cost of manufacturing.

However, fillers generally do not add to the mechanical properties of the fiber cement product and thus the amount of such particulate material is limited to a few percent by weight of the overall composition of the fiber cement product. Thus, not all of the particulate material that arises during production can be reintroduced into the fiber cement slurry and a large fraction is still discarded.

EP 3 523 263 A1 discloses a method for the production of air-cured fiber cement products, in which up to 35% by weight of a cured fiber cement powder, obtained by grinding and reusing fiber cement waste, are incorporated into an aqueous fiber cement slurry from which new fiber cement sheets are produced. However, the cured fiber cement powder acts solely as an inert filler.

It would therefore be desirable to be able to include a larger fraction of the particulate material into the fiber cement products, without however compromising the mechanical performance of the fiber cement products, in order to further reduce the amount of fiber cement products that are discarded.

SUMMARY OF THE INVENTION

The present invention provides for a process for the production of a fiber cement product, in which a larger amount of particulate material, which is for example generated during the sawing, drilling or milling of cured or at least partially cured fiber cement product, or generated during the formation of the fiber cement product from a fiber cement slurry, can be reintroduced, as a reactive filler, into the liquid fiber cement slurry, without compromising the mechanical performance of the resulting fiber cement products.

It is a first object of the present invention to provide a process for the production of a fiber cement product from a liquid fiber cement slurry comprising a fiber cement composition and a carbonated particulate material, comprising the steps of either:

- providing a particulate material comprising a hydrated or partially hydrated cementitious material, and preferably wherein the particulate material further comprising at least one fiber material,
- carbonating the particulate material such as to enable the formation of one or more metal carbonates and of amorphous silica in the hydrated or partially hydrated cementitious material to form the carbonated particulate material; or
- providing a liquid fiber cement slurry comprising a fiber cement composition and a carbonated particulate material; and
- forming a green fiber cement product from the liquid fiber cement slurry comprising the fiber cement composition and the carbonated particulate material, and
- curing the green fiber cement product to form the fiber cement product.

It is a second object of the present invention to provide a fiber cement product, such as a fiber cement panel, obtained from the process for the production of a fiber cement product according to the first object of the invention.

It is a third object of the present invention to provide a building material comprising a fiber cement product according to the second object of the invention.

It is a fourth object of the present invention to provide a use of a carbonated particulate material in the production of a fibre cement product fiber, preferably via the process for the production of a fibre cement product according to the first object, as an ingredient of the liquid fiber cement slurry, wherein said fibre cement product fiber comprises a fiber cement composition, and the carbonated particulate material is dispersed in the fiber cement composition.

Further embodiments of the invention are laid down in the dependent claims.

DESCRIPTION OF PREFERRED EMBODIMENTS

It is a first object of the present invention to provide a process for the production of a fiber cement product comprising a carbonated particulate material from a liquid fiber cement slurry comprising a fiber cement composition and a carbonated particulate material, comprising the steps of either:

- providing a particulate material comprising a hydrated or partially hydrated cementitious material, and preferably wherein the particulate material further comprising at least one fiber material,
- carbonating the particulate material such as to enable the formation of one or more metal carbonates and of amorphous silica in the hydrated or partially hydrated cementitious material to form the carbonated particulate material; or
- providing a liquid fiber cement slurry comprising a fiber cement composition and a carbonated particulate material; and
- forming a green fiber cement product from the liquid fiber cement slurry comprising the fiber cement composition and the carbonated particulate material, and
- curing the green fiber cement product to form the fiber cement product.

Without wishing to be held to a particular theory, it is believed that the carbonation of the particulate material, such as to enable the formation of one or more metal carbonates and of amorphous silica in the hydrated or partially hydrated cementitious material of the particulate material, renders the hydrated or partially hydrated cementitious particulate material more reactive in the sense that the amorphous silica becomes available to the pozzolanic reaction during the curing of the green fiber cement product formed from the liquid fiber cement slurry comprising the carbonated particulate material. This, together with the fibers protruding from the fiber cement product that help anchor the carbonated particulate material in the green fiber cement product, allows for the incorporation of a much higher amount of particulate material into the fiber cement products, when compared to uncarbonated particulate material.

The process for the production of a fiber cement product according to a first object of the present invention is not limited to a particular type of process for the production of a fiber cement.

In one embodiment of the first object according to the invention, the process for the production of a fiber cement product according to a first object of the present invention is a Hatschek-type process, which process may include a curing step, which curing step may be air-curing or autoclave curing. During the Hatschek-type process, specially designed perforated rollers that are partially immersed in a slurry take up solids as they rotate to form an uncured fiber cement product on the roller, which uncured fiber cement product is them peeled from the roller to yield an uncured fiber cement product sheet, which is then further processed. During the Hatschek-type process, prior to curing, the uncured fiber cement product sheet, or green fiber cement product, may be pressed to further remove water and to densify the uncured fiber cement product sheet, using pressure of about 30 to 300 bar, especially in the range of 100 to 300 bar.

In another embodiment of the first object according to the invention, the process for the production of a fiber cement product according to a first object of the present invention is a flow-on-type or Magnani-type process, which process may include a curing step, which curing step may be air-curing or autoclave curing. During the flow-on-type process, a slurry is applied onto a moving mesh that allows liquid to drain and retain solids to form an uncured fiber cement product on the mesh, which uncured fiber cement product is them removed from the mesh to yield an uncured fiber cement product sheet, which is then further processed. During the Magnani-type process, prior to curing, the uncured fiber cement product, or green fiber cement product, sheet may be pressed to further remove water and to densify the uncured fiber cement product sheet, using pressure of about 30 to 300 bar, especially in the range of 100 to 300 bar.

In another embodiment of the first object according to the invention, the process for the production of a fiber cement product according to a first object of the present invention is a molding process, such as compression molding or injection molding.

In one embodiment of the first object according to the invention, the process for the production of a fiber cement product includes a curing step, which comprises curing the green fiber cement product to form the fiber cement product. It is understood that the curing may be achieved by either air-curing or autoclaving.

A fiber cement product is generally made from a fiber cement composition. In the fiber cement product, at least one fiber is bound in a matrix of cementitious material, which functions as the binder. The cementitious material is generally a hydraulic binder, such as for example cement. The fiber cement composition thus comprises a cementitious material, such as hydraulic binder, at least one fiber and optionally other components such as for example a filler, in particular an inert filler such as inorganic particulate material. Examples of fillers are silica, calcium carbonate (ground and precipitated) and such.

Thus, in a preferred embodiment of the first object according to the invention, the fiber cement product and by extension, the fiber cement composition and the liquid fiber cement slurry prepared by combining the fiber cement composition with water, comprises a hydraulic binder such as for example Portland cement. It is noted that while Portland cement is most commonly used hydraulic binder, other binders may be used such as for example cement with high alumina content, Portland cement of iron, trass-cement, slag cement, plaster, calcium silicates formed by autoclave treatment. In particular, combinations of Portland cement with one or more of the aforementioned binders may be considered.

The amount of hydraulic binder such as for example Portland cement in the fiber cement product and by extension, the fiber cement composition and the liquid fiber cement slurry, may vary, and will depend on the application of the fiber cement product. For instance, a fiber cement product may comprise a hydraulic binder such as Portland cement of from about 40 to 90% by weight, based on the weight of the fiber cement product or based on the dry weight of the liquid fiber cement slurry comprising a carbonated particulate material. When the fiber cement product is an autoclaved fiber cement product, the fiber cement product may comprise a hydraulic binder such as Portland cement in amount of less than 50% by weight, or of from about 40 to 45% by weight, based on the weight of the fiber cement product or based on the dry weight of the liquid fiber cement slurry comprising a carbonated particulate material. When the fiber cement product is an aircured fiber cement product, the fiber cement product may comprise a hydraulic binder such as Portland cement in amount of more than 50% by weight, or of from about 60 to 90% by weight, based on the weight of the fiber cement product or based on the dry weight of the liquid fiber cement slurry comprising a carbonated particulate material.

A fiber cement product is generally a product in which at least one fiber is bound in a matrix of cementitious material, which functions as the binder. The at least one fiber comprised in the fiber cement product may generally be chosen from inorganic fibers, cellulosic fibers and/or synthetic polymer fibers. In the fiber cement product, and by extension, in the liquid fiber cement slurry, different types of fibers may have different types of functions. For instance, in one embodiment of the first object according to the invention, the fiber cement product comprises a hydraulic binder and a mixture of at least one inorganic fiber such as glass or basalt fiber and an organic fiber such as for example cellulose or polyethylene. The inorganic fiber is a reinforcing fiber and the organic fiber is a processing fiber. The latter is useful in the process by which the fiber cement product is generally obtained, which process relies on the processing fiber for retaining the solids of the liquid fiber cement slurry on perforated rollers or a mesh. In another embodiment of the first object according to the invention, the fiber cement product comprises a hydraulic binder and a mixture of synthetic polymer fiber such as for example polyolefin, polyester or polyamide fiber and an organic fiber such as for example cellulose. The synthetic polymer is a reinforcing fiber and the organic fiber is a processing fiber. The latter is useful in the process by which the fiber cement product is generally obtained, which process relies on the processing fiber for retaining the solids of the liquid fiber cement slurry on perforated rollers or a mesh.

In a preferred embodiment, the fiber cement product, and by extension, in the liquid fiber cement slurry, the organic processing fibre is refined to a fineness of SR° of about 35 to 75, and/or has a fibre length in excess of 2 mm, preferably in excess of 2.5 mm, when measured using a Kajaani FS300 fibre analysis apparatus.

In a particularly preferred embodiment of the first object according to the invention, the fiber cement product, and by extension, the liquid fiber cement slurry, is free of inorganic fibers, and preferably comprises a hydraulic binder and polyvinyl alcohol fibers, polypropylene or polyethylene fibers, as reinforcing fibers, and cellulosic pulp or polyethylene, as processing fiber.

In a preferred embodiment of the first object according to the invention, the fiber cement product and by extension, the liquid fiber cement slurry, may also further comprise other components, such as but not limited to, limestone, chalk, quick lime, slaked or hydrated lime, ground sand, silica sand flour, quartz flour, amorphous silica, condensed silica fume, microsilica, metakaolin, wollastonite, mica, perlite, vermiculite, aluminum hydroxide, pigments, anti-foaming agents, flocculants, and other additives, in addition to the hydraulic binder and at least one fiber.

In a preferred embodiment of the first object according to the invention, the fiber cement composition comprises at least a hydraulic binder and a processing fiber and a reinforcing fiber, and preferably further comprises an inert filler.

In a preferred embodiment of the first object according to the invention, the liquid fiber cement slurry that is used in the production of a fiber cement product is preferably an aqueous fiber cement slurry.

The process for the production of a fiber cement product according to a first object of the present invention may comprise a step of providing a liquid fiber cement slurry comprising a fiber cement composition and a carbonated particulate material. The carbonated particulate material may be either sourced externally, for example commercially, or it may be sourced internally, as described below, for example by carbonating a particulate material that accumulates during, or is formed in, the production of fiber cement products. The latter variant in particular leads to a less wasteful production of fiber cement products.

The process for the production of a fiber cement product according to a first object of the present invention may comprise a step of providing a particulate material comprising a hydrated or partially hydrated cementitious material. In a preferred embodiment of the process for the production of a fiber cement product according to a first object of the present invention, the particulate material further comprises at least one fiber material.

The particulate material comprising a hydrated or partially hydrated cementitious material may in principle be sourced from any cementitious material. An abundant material from which the particulate material may be sourced is for example cement or concrete material, which may emanate during demolition of old buildings. While cement and concrete materials are suitable as a source for the particulate material comprising a hydrated or partially hydrated cementitious material, in most cases, such cement and concrete materials are in the form of massive building materials such as tiles, walls, slabs or bricks. It is therefore necessary to reduce these building materials in size, such as to make them suitable for incorporation into the liquid fiber cement slurry. Thus, such materials are indeed less preferred as sources of cementitious material. On the other hand, cement or concrete saw dust is generated when building materials are sawed into shape, drilled or milled, and thus, the saw dust may be more conveniently used as a particulate material to be carbonated in the context of the present invention.

In a preferred embodiment of the process for the production of a fiber cement product according to a first object of the present invention, the particulate material comprising a hydrated or partially hydrated cementitious material is sourced from a waste stream emanating in the production of fiber cement products, i.e. comprises at least one fiber material.

When the particulate material comprising a hydrated or partially hydrated cementitious material is sourced from a waste stream emanating in the production of fiber cement products, the particulate material comprises, in addition to the hydrated or partially hydrated cementitious material, at least one fiber material, i.e. the particulate material is a cured or at least partially cured fiber cement material. Consequently, when the fiber cement sheets are milled, sawed or drilled during production of the fiber cement product, the particulate material comprising a hydrated or partially hydrated cementitious material will present a surface from which the at least one fiber material, that was included in the fiber cement material, protrudes. This is due to an adhesive failure between the fiber and the hydrated or partially hydrated cementitious material of the sheet, especially in partially hydrated cementitious material, at the time of milling, sawing or drilling. The fiber material protruding from the fiber cement product helps anchoring the particulate material in the green fiber cement product into which it is incorporated and allows for the incorporation of a much higher amount of hydrated or partially hydrated cementitious particulate material into the fiber cement products. In addition, when the fiber is an inorganic fiber such as glass or basalt fiber, both of which comprise silica, the amorphous silica may undergo a pozzolanic reaction further strengthening the fiber cement product. This effect may be particularly seen when the curing step is an autoclaving step.

In a preferred embodiment, the fiber cement product, and by extension, in the liquid fiber cement slurry, the inorganic fibre such as glass and/or basalt fibre is an inorganic fibre having number or weight average length of about 2 mm to about 16 mm, preferably of about 2 mm to about 8 mm, more preferably of about 2 mm to 6 mm. The inorganic fibre may be chopped or milled inorganic fibre, and preferably is chopped inorganic fibre.

While the particulate material comprising a hydrated or partially hydrated cementitious material can be sourced from a waste stream emanating in the production of fiber cement products, the particulate material comprising a hydrated cementitious material can also be sourced from post-consumer fiber cement products, which have reached the end of their intended life cycle, e.g. used fiber cement panels that were removed from a building in the course of renovation or demolition. In this case, it will be understood that the post-consumer fiber cement products will have to be comminuted into a suitable particulate material. Thus, in one embodiment of the first object according to the invention, the particulate material is formed by carbonating comminuted post-consumer fiber cement products such as to enable the formation of one or more metal carbonates and of amorphous silica in the hydrated cementitious material of the post-consumer fiber cement product to form the carbonated particulate material. Reducing the size of the particulate material will provide a of the particulate material having a more favourable surface-to-volume ratio for the carbonation. Therefore, the particulate material, in particular when sourced from post-consumer fiber cement, has a particles size distribution such that less than 10% by weight of the particulate material has a size of more than 90 $\mu$m and/ such that less than 30% by weight of the particulate material has a size of more than 45 $\mu$m. Stated alternatively, the particulate material, in particular when sourced from post-consumer fiber cement, has a particles size distribution such that more than 90% by weight of the particulate material has a size of less than 90 $\mu$m and/ such that less than 70% by weight of the particulate material has a size of less than 45 $\mu$m.

In one embodiment of the first object according to the invention, the particulate material is is a particulate fiber cement material, which may be obtained from sawing, milling, drilling a hydrated or partially hydratedfiber cement materials, such as saw dust, milling dust, drilling dust emanating from the production of fiber cement materials. As an example, saw dust, milling dust, drilling dust from green fiber cement sheets may be used as particulate material.

In another embodiment of the first object according to the invention, the particulate material is a particulate fiber cement material such as fiber cement sludge. The fibre cement sludge may be provided by passively allowing production wastewater to sediment in sedimentation tanks and decanting the accumulated sludge or by actively removing the particulate fiber cement material from the production wastewater, for example via filtration. Production wastewater may for example emanate from purging the production lines during interruptions of production. As the liquid fiber cement slurry from which the fiber cement product is produced continuously hydrates because of the hydraulic binder is in contact with water, the production lines must be purged of the liquid fiber cement slurry when production is interrupted. Interruption of production may be scheduled or unscheduled. As an example, scheduled interruptions are maintenance interruptions or holiday interruptions, when slurry is washed out of the production line with water, creating a dilute liquid fiber cement slurry. Such dilute liquid fiber cement slurry is directed into tanks where it may be allowed to settle or where it is kept in motion to avoid settling. However, the solids in the dilute slurry may no longer be used as "fresh" liquid fiber cement slurry, since the cementitious material will have already at least partially hydrated after some hours, or over the holiday. It is therefore advantageous to carbonate the already partially hydrated fibre cement slurry such as to enable the formation of one or more metal carbonates and of amorphous silica in the partially hydrated cementitious material to form a carbonated particulate material. Thus, in one embodiment of the first object according to the invention, the particulate material is formed by carbonating a partially hydrated liquid fibre cement slurry. In particular, the partially hydrated liquid fibre cement slurry is obtained from at least partially hydrating the same liquid fibre cement slurry used in the production "fresh" fiber cement products. When the particulate material is a particulate fiber cement material such as fiber cement sludge, the particle size of the particulate material is finer, in contrast to sawdust, where generally the particle size of the particulate material is coarser. A finer particle size of the particulate material generally leads to a denser packing of the particles within the fiber cement product.

Thus, in a preferred embodiment of the first object according to the invention, the particulate material corresponds to a slurry of partially hydrated fiber cement composition, which slurry of partially hydrated fiber cement composition maybe carbonated to yield a carbonated partially hydrated fiber cement composition.

It is understood that the particulate material comprising a hydrated or partially hydrated cementitious material may also be sourced from a mixture of a waste stream emanating in the production of cementitious materials and of a waste stream emanating in the production of fiber cement materials, a mixture of particulate fiber cement material and a different particulate material comprising a hydrated or partially hydrated cementitious material such as cement.

Thus, in one embodiment of the first object according to the invention, the particulate material is a particulate material is a mixture of particulate fiber cement material and particulate cement or concrete.

The process for the production of a fiber cement product according to a first object of the present invention comprises a step of carbonating the particulate material such as to enable the formation of one or more metal carbonates and of amorphous silica in the hydrated or partially hydrated cementitious material.

The present invention is not particularly restricted to a certain process for carbonating the particulate material. As an example, carbonating the particulate material may be achieved by exposing the particulate material to carbon dioxide, which may be gaseous, liquid or (super)critical carbon dioxide, for example either under high pressure or at atmospheric pressure and/or elevated or ambient temperature. In particular, carbonating the particulate material may be achieved by releasing carbon dioxide into a slurry comprising the particulate material, such as for example either under high pressure or at atmospheric pressure and/or elevated or ambient temperature.

In one embodiment of the first object according to the invention, the step of carbonating the particulate material such as to enable the formation of one or more metal carbonates and of amorphous silica in the hydrated or partially hydrated cementitious material is carried out by providing or preparing a slurry of the particulate material and contacting a composition comprising carbon dioxide, preferably as a gas, with the slurry of the particulate material. The composition comprising carbon dioxide may for example be a combustion gas of a hydrocarbon such as for example natural gas or biogas. The composition comprising carbon dioxide may preferably comprise at least 5% by weight of carbon dioxide, and preferably at least 15% by weight of carbon dioxide, with the remainder, by weight, of the composition comprising carbon dioxide being formed of nitrogen, water vapour, atmospheric air or mixtures thereof. More preferably, the composition comprising carbon dioxide is carbon dioxide, i.e. it consists of carbon dioxide. In a preferred embodiment, the composition comprising carbon dioxide is released into the slurry of the particulate material, for example from a bottom part of a container in which container the slurry is contained, during the step of carbonating the particulate material. Advantageously, the composition comprising carbon dioxide, after having left the slurry, is recirculated back into the slurry, for example via a gas pump. For instance, a container in which the composition can be gathered in an overhead space is advantageous. Such a methods of carbonation is described for concrete sludge in Yamasaki et al. ACS Omega 2021, 6, 15564-15571. Carbonated concrete sludge may be used as a carbonated particulate material in the present invention.

In this case, the carbonated particulate material may be added to the liquid fibre cement slurry as a slurry or may be added to the liquid fibre cement slurry as a powder, depending on whether the slurry of the carbonated particulate material is incorporated as-is into the liquid fibre cement slurry or whether it is dewatered prior to the incorporation into the liquid fibre cement slurry.

In another embodiment of the first object according to the invention, the step of carbonating the particulate material such as to enable the formation of one or more metal carbonates and of amorphous silica in the hydrated or partially hydrated cementitious material is carried out by incorporating the particulate material into the liquid fibre cement slurry and releasing carbon dioxide, preferably as a gas, into the liquid fibre cement slurry comprising the particulate material. In a preferred embodiment, the carbon dioxide is released into the slurry from a bottom part of a container, in which container the liquid fibre cement slurry comprising the particulate material is contained during the step of carbonating the particulate material.

The level of carbonation may be quantified on the basis of $CO_2$ content of the input material (e.g. the particulate material comprising hydrated or partially hydrated cementitious material), compared to the output material (e.g. the carbonated particulate material) and comparing the calcium content of the input material. In the context of the present invention, the calcium value and $CO_2$ content of the input material can be assumed to be constant and thus a simple measurement of the $CO_2$ in the product material can be used to quantify the level of carbonation, as per the following equations where "CaO" is CaO in the input material, "CO2in" is $CO_2$ in the input material and "CO2out" is CO2 in the product material:

$$(1) \; Precarbonation \; free \; CaO = CaO - \left(\frac{56}{44} * CO2in\right)$$

$$(2) \; Postcarbonation \; free \; CaO = CaO - \left(\frac{56}{44} * CO2out\right)$$

$$(3) \; Carbonation \; degree \; (\%) = \frac{Precarbonation \; free \; CaO}{Postcarbonation \; free \; CaO} * 100\%$$

In an embodiment of the first object according to the invention, the level of carbonation of the carbonated particulate material is preferably at least 95% according to equation (3). At a level of carbonation of 95% or more, essentially all C-S-H gel and all calcium silicates of the hydrated hydraulic binder have been converted to CaCOs and amorphous silica.

The process for the production of a fiber cement product according to a first object of the present invention comprises a step of adding the carbonated particulate material to the liquid fiber cement slurry for the production of a fiber cement product.

In one embodiment of the first object according to the invention, in the step of adding the carbonated particulate material to the liquid fiber cement slurry, the carbonated particulate material may be added to the liquid fiber cement slurry in any suitable amount, from as little as 1 weight percent, and up to 25 weight percent and possibly more, based on the dry weight of the liquid fiber cement slurry comprising the fiber cement composition and the carbonated particulate material.

In one embodiment of the first object according to the invention, in the step of adding the carbonated particulate material to the liquid fiber cement slurry, the carbonated particulate material is comprised in the liquid fibre cement slurry in an amount of at least 4 weight percent, or from about 4 weight percent to about 15 weight percent, based on the dry weight of the liquid fibre cement slurry. Preferably, the carbonated particulate material is comprised in the liquid fibre cement slurry in an amount of at least 8 weight percent, or from about 8 weight percent to about 25 weight percent, based on the dry weight of the liquid fibre cement slurry.

In one embodiment of the first object according to the invention, in the process for the production of a fibre cement product, the particulate material comprising a hydrated or partially hydrated cementitious material is obtained via the hydration or partial hydration of the liquid fibre cement slurry used for the fibre cement product. Stated alternatively, the particulate material added to the liquid fibre cement slurry has the same (solids) composition as the fibre cement product, i.e. the waste stream emanating from the production of a given fibre cement product is re-introduced into the liquid fibre cement slurry used for the same fibre cement product.

It is a second object of the present invention to provide a fiber cement product, such as a fiber cement panel, obtained from the process for the production of a fiber cement product according to the first object of the invention.

It is understood that the term "panel" should be construed broadly, and is not limited to flat panels such as for example wall cladding, siding, or wall shingles but also encompasses corrugated panels such as roofing panels, roofing shingles. In any case, the panels may be suitable for exterior or interior use.

The fiber cement product according to the second object of the present invention may be used in a building material such as wall cladding and such.

The fiber cement product according to the second object of the present invention exhibits a low dilation, in particular in machine direction, which dilation may be less than 4.4 mm/m. In particular, it was found a fiber cement product incorporating an amount of particulate material that was carbonated exhibited a dilation that was reduced by more than 25%, preferably by more than 40%, and more preferably by more than 50%, when compared to the dilation exhibited by a fiber cement product incorporating the same amount of particulate material that was not carbonated. It is understood that when comparing a fiber cement product incorporating an amount of particulate material that was carbonated with a fiber cement product incorporating an amount of particulate material that was not carbonated, the composition of the fiber cement products is otherwise the same.

EXAMPLES

In order to investigate the dimensional stability of the fibre cement product according to the invention, fibre cement sheets were manufactured using a liquid fibre cement slurry comprising a fiber cement composition.

A reference fibre cement sheet was manufactured from a slurry comprising 84,7 dry weight percent of fresh Portland cement, 10,2 by weight percent of limestone, and 5,1 dry weight percent of cellulose.

A fibre cement sheet according to the invention was manufactured from a slurry comprising 74,7 dry weight percent of fresh Portland cement, 10,2 by weight percent of limestone, 5,1 dry weight percent of cellulose and 10 dry weight percent of a particulate material that was carbonated.

A comparative fibre cement sheet was manufactured from a slurry comprising 74,7 dry weight percent of fresh Portland cement, 10,2 by weight percent of limestone, 5,1 dry weight percent of cellulose and 10 dry weight percent of a particulate material that was *not* carbonated. The particulate material was the same as for the fibre cement sheet according to the invention, except that it was not carbonated.

The manufactured sheets had a length of 200 mm and a width of 75 mm, and the relative dilation of the sheets was recorded in response to exposure to water and expressed in longitudinal direction in mm/m.

The sheets were first conditioned for 7 days at ambient conditions in a lab, and their length L2 was recorded in mm. Then, the sheets were immersed in water for 7 days, standing in a rack, to allow water contact on all sides of the sheet.

After 7 days the sheets were taken from the water and wiped with a damp dish cloth, and their length was recorded.

Subsequently, the sheets were placed in a rack and dried at 105°C for 7 days. After the 7 days the sheets were placed in a desiccator containing silica gel and left to cool to ambient temperature, and their length L1 was measured and recorded in mm.

The relative dilation is expressed as L2 - L1, normalized with respect to the dry length L1.

The reference fibre cement sheet displayed the lowest dilation of 4.1 mm/m (0.41 %), whereas the comparative fibre cement sheet displayed the highest dilation of 4.65 mm/m (0.465%). The fibre cement sheet according to the invention displayed an intermediate dilation of 4.4 mm/m (0.44%), which was lower than the comparative fibre cement sheet. This shows that carbonation of particulate material that is incorporated as a filler in the slurry can mitigate the increase in dilation associated with the use of uncarbonated particulate material as inert filler. Thus, with respect to the reference sheet, the uncarbonated sheet exhibited an increase in dilation of 13.4%, i.e. (4.65-4.1)*100/4.1, while the uncarbonated sheet exhibited an increase in dilation of 7.3%, i.e. (4.4-4.1)*100/4.1 = Stated alternatively, the dilation could be reduced by almost approx.. 50%.

**Claims**

1. A process for the production of a fibre cement product comprising a carbonated particulate material, using a liquid fibre cement slurry comprising a fiber cement composition and a carbonated particulate material, comprising the steps of:

    - providing a particulate material comprising a hydrated or partially hydrated cementitious material,
    - carbonating the particulate material such as to enable the formation of one or more metal carbonates and of amorphous silica in the hydrated or partially hydrated cementitious material to form the carbonated particulate material,
    - forming a green fiber cement product from the liquid fibre cement slurry, and,
    - curing the green fiber cement product to form the fiber cement product.

2. The process for the production of a fibre cement product according to claim 1, wherein the carbonated particulate material is comprised in the liquid fibre cement slurry in an amount of at least 4 weight percent, based on the dry weight of the liquid fibre cement slurry.

3. The process for the production of a fibre cement product according to any preceding claim, wherein the carbonated particulate material is formed by carbonating a partially hydrated fibre cement slurry, wherein the partially hydrated fibre cement slurry is preferably obtained by partially hydrating a fiber cement composition.

4. The process for the production of a fibre cement product according to any preceding claim, wherein the carbonated particulate material is formed by carbonating a particulate material obtained from sawing, milling, drilling a hydrated or partially hydrated cementitious material.

5. The process for the production of a fibre cement product according to any preceding claim, wherein carbonating the particulate material comprises releasing carbon dioxide into a slurry comprising the particulate material comprising a hydrated or partially hydrated cementitious material.

6. The process for the production of a fibre cement product according to any preceding claim, wherein the fiber cement composition comprises Portland cement as the hydraulic binder and/or in the particulate material, the hydrated or partially hydrated cementitious material is hydrated or partially hydrated Portland cement.

7. The process for the production of a fibre cement product according to any preceding claim, wherein the at least one fibre material is chosen among inorganic fibers, cellulosic fibers and synthetic polymer fibers, and wherein preferably the at least one fibre material is an inorganic fiber comprising silica, preferably chosen from glass fiber or basalt fiber.

8. The process for the production of a fibre cement product according to any preceding claim, wherein the carbonated particulate material is formed by carbonating a partially hydrated fibre cement slurry, wherein the partially hydrated liquid fibre cement slurry is obtained from the liquid fibre cement slurry used for the production of the fiber cement product.

9. The process for the production of a fibre cement product according to any preceding claim, wherein the fiber cement product comprises the hydraulic binder, such as Portland cement, in an amount of from about 40 to 90% by weight, based on the weight of the fiber cement product or based on the dry weight of the liquid fiber cement slurry.

10. The process for the production of a fibre cement product according to any preceding claim, wherein the process for the production of a fiber cement product comprises a step of autoclave curing, and/or wherein he hydraulic binder, such as Portland cement, is comprised in an amount of from about 40 to 45% by weight, based on the weight of the fiber cement product or based on the dry weight of the liquid fiber cement slurry.

11. The process for the production of a fibre cement product according to any preceding claim, wherein the process for the production of a fiber cement product comprises a step of autoclave curing, and/or wherein he hydraulic binder, such as Portland cement, is comprised in an amount of from about 60 to 90% by weight, based on the weight of the fiber cement product or based on the dry weight of the liquid fiber cement slurry.

12. A fiber cement product, preferably obtained by the process for the production of a fiber cement product according to any one of the preceding claims, wherein the fiber cement product comprises a carbonated particulate material.

13. The fiber cement product according to claim 12, wherein the fiber cement product comprises a carbonated particulate material in an amount of at least 4 weight percent, or from about 4 weight percent to about 15 weight percent, based on the weight of the fiber cement product.

14. A building material comprising a fiber cement product according to claim 12 or 13.

15. Use of a carbonated particulate material in a process for the production of a fibre cement product fiber, preferably according to any one of claims 1 to 11, wherein said fibre cement product fiber comprises a fiber cement composition, and the carbonated particulate material is dispersed in the fiber cement composition.

Europäisches
Patentamt

European
Patent Office

Office européen
des brevets

## EUROPEAN SEARCH REPORT

**Application Number**

EP 23 17 8788

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | EP 3 523 263 B1 (ETEX SERVICES NV [BE]) 5 October 2022 (2022-10-05) * paragraph [0072] * * claims 1,7-9,11 * ----- | 1-15 | INV. C04B28/04 |
| A | CN 114 105 561 A (SHENZHEN TIANDI DONGJIAN CONCRETE CO LTD) 1 March 2022 (2022-03-01) * claims 1-8 * ----- | 1,6 | |
| A | CN 115 572 122 A (HUAXIN CEMENT CO LTD) 6 January 2023 (2023-01-06) * claims 1,4,5,8-10 * ----- | 1,12 | |
| A | EP 3 305 738 A1 (ETEX SERVICES NV [BE]) 11 April 2018 (2018-04-11) * claims 1,3,6,8,9,10,13 * ----- | 1,12 | |
| A | EP 3 957 616 A1 (SWISSPEARL GROUP AG [CH]) 23 February 2022 (2022-02-23) * paragraph [0016] * * claims 1-3, 10-13 * ----- | 1,12 | TECHNICAL FIELDS SEARCHED (IPC) |
| A | ABE MASAHIRO ET AL: "Investigation of Mineral Carbonation with Direct Bubbling into Concrete Sludge", ACS OMEGA, ACS PUBLICATIONS, US , vol. 6, no. 24 22 June 2021 (2021-06-22), pages 15564-15571, XP009550128, ISSN: 2470-1343, DOI: 10.1021/ACSOMEGA.0C04758 Retrieved from the Internet: URL:https://pubs.acs.org/doi/abs/10.1021/a csomega.0c04758 [retrieved on 2023-11-23] * abstract * ----- -/-- | 1,12 | C04B |

The present search report has been drawn up for all claims

| Place of search | Date of completion of the search | Examiner |
|---|---|---|
| The Hague | 30 November 2023 | Kolb, Ulrike |

EPO FORM 1503 03.82 (P04C01)

**EP 4 417 589 A1**

Europäisches
Patentamt

European
Patent Office

Office européen
des brevets

**EUROPEAN SEARCH REPORT**

Application Number

EP 23 17 8788

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2021/074003 A1 (HEIDELBERGCEMENT AG [DE]; HCONNECT 2 GMBH [DE]) 22 April 2021 (2021-04-22) * paragraphs [0007], [0008], [0017] * * claims 1,2,6-14,16 * | 1-15 | |
| A | EP 3 778 525 A1 (HEIDELBERGCEMENT AG [DE]) 17 February 2021 (2021-02-17) * paragraph [0029] * * claims 1,2,3,6,7 * | 1,12 | |
| A | US 2019/218143 A1 (ETEX SERVICES NV [BE]) 18 July 2019 (2019-07-18) * claims 1,5,10,12 * | 1,12 | |
| A | US 2008/178771 A1 (NICHIHA CO LTD [JP]) 31 July 2008 (2008-07-31) * paragraph [0140] * * claims 1-9 * | 1,12 | |
| | | | TECHNICAL FIELDS SEARCHED (IPC) |

The present search report has been drawn up for all claims

| Place of search | Date of completion of the search | Examiner |
|---|---|---|
| The Hague | 30 November 2023 | Kolb, Ulrike |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

12

## ANNEX TO THE EUROPEAN SEARCH REPORT
## ON EUROPEAN PATENT APPLICATION NO.

EP 23 17 8788

This annex lists the patent family members relating to the patent documents cited in  the above-mentioned European search report.
The members are as contained in the European Patent Office EDP file on
The European Patent Office is in no way liable for these particulars which are merely given for the purpose of information.

30-11-2023

| Patent document cited in search report | | | Publication date | Patent family member(s) | | Publication date |
|---|---|---|---|---|---|---|
| EP 3523263 | B1 | | 05-10-2022 | AU | 2017339075 A1 | 14-03-2019 |
| | | | | BR | 112019005707 A2 | 09-07-2019 |
| | | | | CL | 2019000785 A1 | 02-08-2019 |
| | | | | CO | 2019002235 A2 | 31-05-2019 |
| | | | | DK | 3523263 T3 | 31-10-2022 |
| | | | | EP | 3305742 A1 | 11-04-2018 |
| | | | | EP | 3523263 A1 | 14-08-2019 |
| | | | | EP | 4148029 A2 | 15-03-2023 |
| | | | | ES | 2929651 T3 | 30-11-2022 |
| | | | | MY | 191189 A | 07-06-2022 |
| | | | | PE | 20190714 A1 | 20-05-2019 |
| | | | | PH | 12019500397 A1 | 20-05-2019 |
| | | | | PL | 3523263 T3 | 23-01-2023 |
| | | | | RU | 2019107947 A | 21-09-2020 |
| | | | | US | 2019345064 A1 | 14-11-2019 |
| | | | | WO | 2018065517 A1 | 12-04-2018 |
| CN 114105561 | A | | 01-03-2022 | NONE | | |
| CN 115572122 | A | | 06-01-2023 | NONE | | |
| EP 3305738 | A1 | | 11-04-2018 | EP | 3305738 A1 | 11-04-2018 |
| | | | | WO | 2018065522 A1 | 12-04-2018 |
| EP 3957616 | A1 | | 23-02-2022 | EP | 3957616 A1 | 23-02-2022 |
| | | | | WO | 2023280484 A1 | 12-01-2023 |
| WO 2021074003 | A1 | | 22-04-2021 | CA | 3152661 A1 | 22-04-2021 |
| | | | | EP | 3808713 A1 | 21-04-2021 |
| | | | | EP | 4045472 A1 | 24-08-2022 |
| | | | | US | 2023036356 A1 | 02-02-2023 |
| | | | | WO | 2021074003 A1 | 22-04-2021 |
| EP 3778525 | A1 | | 17-02-2021 | NONE | | |
| US 2019218143 | A1 | | 18-07-2019 | AU | 2017339076 A1 | 21-03-2019 |
| | | | | BR | 112019006462 A2 | 25-06-2019 |
| | | | | CL | 2019000784 A1 | 02-08-2019 |
| | | | | CO | 2019002219 A2 | 31-05-2019 |
| | | | | DK | 3523262 T3 | 13-09-2021 |
| | | | | EP | 3305739 A1 | 11-04-2018 |
| | | | | EP | 3523262 A1 | 14-08-2019 |
| | | | | ES | 2883210 T3 | 07-12-2021 |
| | | | | HU | E055649 T2 | 28-12-2021 |
| | | | | MY | 191278 A | 13-06-2022 |
| | | | | PE | 20190715 A1 | 20-05-2019 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

**EP 23 17 8788**

**30-11-2023**

| Patent document cited in search report | Publication date | Patent family member(s) | | Publication date |
|---|---|---|---|---|
| | | PH | 12019500396 A1 | 20-05-2019 |
| | | PL | 3523262 T3 | 06-12-2021 |
| | | RU | 2019108129 A | 21-09-2020 |
| | | SI | 3523262 T1 | 30-11-2021 |
| | | US | 2019218143 A1 | 18-07-2019 |
| | | WO | 2018065518 A1 | 12-04-2018 |
| US 2008178771 A1 | 31-07-2008 | NONE | | |

EPO FORM P0459

**page 2 of 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3523263 A1

**Non-patent literature cited in the description**

- **YAMASAKI et al.** *ACS Omega,* 2021, vol. 6, 15564-15571